# EUROPÄISCHE PATENTANMELDUNG

(11) **EP 2 977 340 A1**
(43) Veröffentlichungstag der Anmeldung: **27.01.2016**
(21) Anmeldenummer: 15178191.1
(22) Anmeldetag: 24.07.2015
(51) Int. Cl.: B65G 53/14

(54) **FÜTTERUNGSVORRICHTUNG**

(30) Priorität: 24.07.2014 AT 5011614 U
(71) Anmelder: Schauer Agrotronic GmbH, 4731 Prambachkirchen (AT)
(72) Erfinder: SCHWEIZER, Günther, 4074 Stroheim (AT)
(74) Vertreter: Burger, Hannes

(57) **Zusammenfassung**

Die Erfindung betrifft eine Fütterungsvorrichtung mit zumindest einem Austeilbehälter (5) und zumindest einer, den Austeilbehälter (5) mit zumindest einer Abgabestelle verbindenden Förderleitung (16), wobei die zumindest eine Förderleitung (16) mit zumindest einem Verdichter (17) oder zumindest einem Gebläse zur Erzeugung einer Strömung in einem Fördermedium, insbesondere Luft, im Inneren der Förderleitung (16) in Richtung der zumindest einen Abgabestelle verbunden ist, wobei der Austeilbehälter (5) über zumindest einen Zulaufschacht (11) mit zumindest einer zwischen der zumindest einen Förderleitung (16) und dem zumindest einen Verdichter (17) oder dem zumindest einen Gebläse angeordneten VenturiDüse (10) verbunden ist.

## Beschreibung

Die Erfindung betrifft eine Fütterungsvorrichtung mit zumindest einem Austeilbehälter und zumindest einer, den Austeilbehälter mit zumindest einer Abgabestelle verbindenden Förderleitung, wobei die zumindest eine Förderleitung mit zumindest einem Verdichter oder zumindest einem Gebläse zur Erzeugung einer Strömung in einem Fördermedium, insbesondere Luft, im Inneren der Förderleitung in Richtung der zumindest einen Abgabestelle verbunden ist.

Bei (pneumatischen) Fütterungssystemen der oben genannten Art, wird aus einem Austeilbehälter, der je nach Ausführungsart auch als Mischbehälter fungieren kann Futter (trocken oder Feuchtfutter) oder Rohfaserträger in einen Luftstrom dosiert. Dieses wird dann pneumatisch, über die Förderleitung zu den jeweiligen Abgabestellen transportiert. Bei bisherigen Systemen wird das Futter mittels aufwendiger Kammerschleuse in den Luftstrom dosiert. Die Kammerschleuse verhindert, dass die Förderluft in den Austeilbehälter dringt. Da diese Kammerschleuse in der Regel aber einem gewissen Verschleiß unterliegt, dringt mit fortlaufendem Gebrauch, immer mehr Förderluft in den Austeilbehälter und der Druck in der Förderleitung sinkt was in weiterer Folge zum Blockieren der Anlage führen kann. Des Weiteren sind solche Kammerschleusen in der Regel sehr Fremdkörperempfindlich und so können diese durch Fremdkörper oder Faserstoffe beschädigt oder blockiert werden. Ein weiterer Nachteil dieser Konstruktion ist, dass durch die rotierende und scherende Arbeitsbewegung, strukturierte Futter stark gebrochen wird.

Es ist daher eine Aufgabe der Erfindung, die oben genannten Nachteile des Stands der Technik zu überwinden.

Diese Aufgabe wird mit einer Fütterungsvorrichtung der eingangs genannten Art erfindungsgemäß dadurch gelöst, dass der Austeilbehälter über zumindest einen Zulaufschacht mit zumindest einer zwischen der zumindest einen Förderleitung und dem zumindest einen Verdichter oder dem zumindest einen Gebläse angeordneten Venturi-Düse verbunden ist.

Durch den in der Venturi-Düse quer zur Flussrichtung des die Venturi-Düse aus Richtung des Gebläses oder Verdichters in Richtung der Förderleitung durchströmenden Fördermediums mündenden Zulaufschacht wird in dem Austeilbehälter befindliches Gut angesaugt und in die Förderleitung eingespeist. Die Erfindung ermöglicht es somit, auf einfache und sehr zuverlässige sowie verschleißarme Weise Futter oder Rohfaserträger in die Förderleitung einzuspeisen. Durch die erfindungsgemäße Lösung lässt sich verhindern, dass das Fördermedium aufgrund eines zu geringen (Luft)drucks in den Austeilbehälter über den Zulaufschacht entweicht und somit die Futtersaugwirkung verringert bzw. unterbunden wird. Gemäß der Erfindung kann zur Erzeugung einer gewünschten Druckdifferenz zwischen dem die Venturi-Düse durchströmenden Fördermedium und dem Austeilbehälter entweder Fördermedium (Luft) aus dem Strom des Fördermediums abgezweigt und dem Austeilbehälter zugeführt oder zusätzliche Luft mit einem eigenen Gebläse oder Verdichter in den Austeilbehälter eingeblasen werden.

Gemäß einer vorteilhaften Variante der Erfindung, bei welcher auf ein zusätzliches Gebläse bzw. einen zusätzlichen Verdichter für den Austeilbehälter verzichtet werden kann, kann es vorgesehen sein, dass stromaufwärts vor der zumindest einen Venturi-Düse von einer die zumindest eine Förderleitung mit dem Gebläse oder dem Verdichter verbindenden Druckleitung zumindest eine Leitung abzweigt, welche in den Austeilbehälter mündet.

Um die Größe des in den Austeilbehälter abgezweigten Teils des Fördermediums einstellen zu können, kann es vorgesehen sein, in der zumindest einen, in den Austeilbehälter mündenden Leitung zumindest ein Drosselventil und/oder zumindest ein Absperrventil angeordnet ist.

Gemäß einer bevorzugten Variante der Erfindung kann es vorgesehen sein, dass der zumindest eine Zulaufschacht mit dem zumindest einen, mit der Förderleitung verbundenen Verdichter oder dem zumindest einen mit der Förderleitung verbundenen Gebläse verbunden ist, oder dass der zumindest eine Zulaufschacht mit zumindest einem, von dem mit der Förderleitung verbundenen Gebläse unterschiedlichen Gebläse oder mit zumindest einem, von dem mit der Förderleitung verbundenen Verdichter unterschiedlichen Verdichter verbunden ist. Auf diese Weise lässt sich auch im Bereich der Zuführung des Futters bzw. Rohfaserträgers in die Förderleitung der gleiche oder zumindest ein ähnlicher Druck herstellen, wie in dem Austeilbehälter. Dadurch lässt sich sehr effizient gewährleisten, dass die durch die Venturi-Düse erzeugte Druckdifferenz zwischen Fördermedium und Zulaufschacht ausreichend ist, um Futter aus dem Austeilbehälter in die Förderleitung zu saugen. Auch hier gilt, dass zur Erzeugung einer gewünschten Druckdifferenz zwischen dem die Venturi-Düse durchströmenden Fördermedium und dem Austeilbehälter entweder Fördermedium aus dem von dem mit der Förderleitung verbundenen Verdichters oder Gebläses erzeugten Strom des Fördermediums abgezweigt und dem Zulaufschacht zugeführt oder zusätzliche Luft mit einem eigenen Gebläse oder Verdichter in den Zulaufschacht eingeblasen werden kann.

Gemäß einer Variante der Erfindung, welche mit nur einem einzigen Gebläse oder Verdichter das Auslangen findet, kann es vorgesehen sein, dass stromaufwärts vor der zumindest einen Venturi-Düse von zumindest einer, die zumindest eine Förderleitung mit dem zumindest einen Verdichter oder dem zumindest einen Gebläse verbindenden Druckleitung zumindest eine Leitung abzweigt, welche in den zumindest einen Zulaufschacht mündet.

Durch eine Veränderung der Druckverhältnisse in dem Austeilbehälter bzw. des Zulaufschachtes und dem in der Förderleitung befindlichem Fördermedium, lässt sich die Einbringungsgeschwindigkeit des Futters in die Förderleitung steuern. Zu dem soeben genannten Zweck kann beispielsweise in der zumindest einen, in den zumindest einen Zulaufschacht mündenden Leitung zumindest ein Drosselventil angeordnet sein.

Entsprechend einer vorteilhaften Variante der Erfindung kann es vorgesehen sein, dass die Fütterungsvorrichtung zumindest ein Entlüftungsventil für den Austeilbehälter aufweist. Durch Öffnen des Entlüftungsventils kann der Austeilbehälter entlüftet werden, wenn kein Futter in die Förderleitung dosiert wird bzw. werden soll.

Weiters kann es vorgesehen sein, dass der Austeilbehälter mit einem Anmischbehälter zum Mischen von Futter über zumindest eine, mit zumindest einer Einlaufklappe verschließbare Öffnung verbunden ist, oder dass der Austeilbehälter auch dem Mischen von Futter dient.

Zum besseren Verständnis der Erfindung wird diese anhand der nachfolgenden Figuren näher erläutert.

Es zeigen jeweils in stark vereinfachter, schematischer Darstellung:
- Fig. 1: eine erste Variante einer erfindungsgemäßen Vorrichtung;
- Fig. 2: eine zweite Variante einer erfindungsgemäßen Vorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

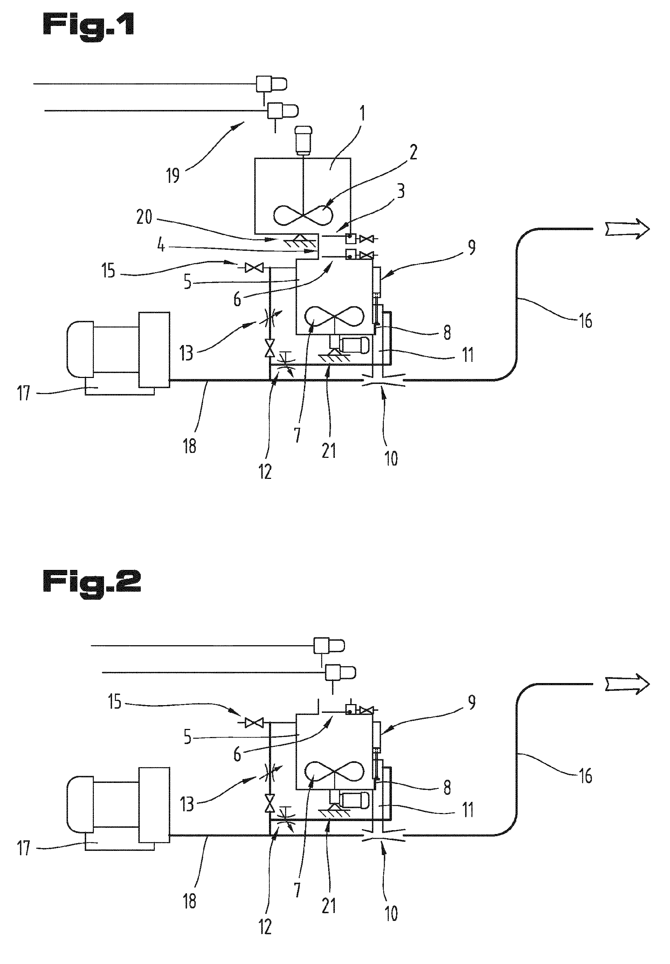

Gemäß Fig. 1 kann eine erfindungsgemäße Fütterungsvorrichtung einen Anmischbehälter 1 für Futter oder Rohfaserträger aufweisen, in welchem ein Mischer 2, beispielsweise in Form eines Rührwerkes, angeordnet sein kann. Die miteinander zu vermischenden Komponenten können über eine Komponentenzubringung 19 dem Anmischbehälter 1 zugeführt werden.

Der Anmischbehälter 1 kann eine Abwurfklappe 3 aufweisen und über ein Übergangsstück 4 mit einem Austeilbehälter 5 verbunden sein. In einem dem Anmischbehälter 1 zugewandten Bereich kann der Austeilbehälter 5 eine Einlaufklappe 6 aufweisen. Weiters kann der Austeilbehälter 5 einen Mischer 7 sowie eine mit einem Austeilschieber 8 verschließbare Öffnung aufweisen, durch welche in dem Austeilbehälter 5 befindliches Gut entnommen werden kann. Der Austeilschieber 8 kann über einen Antrieb 9 betätigt werden.

Sowohl der Anmischbehälter 1 als auch der Austeilschieber 8 können mit Waagen 20 bzw. 21 verbunden bzw. auf diesen angeordnet sein, um eine exakte Dosierung zu ermöglichen.

Abweichend von der in Fig. 1 dargestellten Ausführungsform kann die Fütterungsvorrichtung anstelle des Anmischbehälters 1 und des Austeilbehälters 5 auch nur den Austeilbehälter 5 aufweisen, wie dies in Fig. 2 dargestellt ist. Gemäß Fig. 2 dient der Austeilbehälter 5 in diesem Fall auch dem Mischen. In diesem Fall kann die Komponentenzubringung 19 direkt mit dem Austeilbehälter 5 verbunden sein.

Erfindungsgemäß ist der Austeilbehälter 5 über eine Venturi-Düse 10 mit einer Förderleitung 16 verbunden. Die Förderleitung 16 führt zu Abgabestellen für das Futter bzw. Rohfaserträger. Die Venturi-Düse 10 ist zwischen der Förderleitung 16 und einem Verdichter 17 so angeordnet, dass ein von dem Verdichter 17 erzeugter Strom eines Fördermediums, welches bevorzugt Luft ist, sich durch die Venturi-Düse 10 in die Förderleitung 16 bewegt. Anstelle des Verdichters 17 kann auch ein Gebläse vorgesehen sein. In der dargestellten Ausführungsform ist die Venturi-Düse 10 zwischen einer Druckleitung 18 und der Förderleitung 16 angeordnet.

An einer Engstelle der Venturi-Düse 10 mündet ein Zulaufschacht 11, über welches Futter bzw. Rohfaserträger aus dem Austeilbehälter 5 in das Fördermedium bzw. die Förderleitung 16 eingespeist werden.

Gemäß der in Fig. 1 und 2 dargestellten Ausführungsform kann der Austeilbehälter 5 ebenfalls mit dem Verdichter 17 verbunden sein. Dies kann wie dargestellt durch eine von der Druckleitung 18 abzweigende Leitung erfolgen, die in den Austeilbehälter 5 mündet. Zwischen der Druckleitung 18 und dem Austeilbehälter 5 kann ein Drosselventil 13 vorgesehen sein. Ein mittels des Drosselventils 13 einstellbarer Teil des Fördermediums kann in den Austeilbehälter 5, welcher mittels der Einlaufklappe 6 verschlossen ist, geschleust und somit das gleiche Druckniveau wie in der Druckleitung 18 erzeugt werden. Über ein Absperrventil 14 kann eine Strömungsverbindung zwischen der Druckleitung 18 und dem Austeilbehälter 5 auch zur Gänze unterbunden werden.

Ein weiterer Teil des Fördermediums kann über ein Drosselventil 12 in den Zulaufschacht 11 eingeschleust werden, damit auch in diesem Bereich das gewünschte Druckverhältnis zum Förderstrom erreicht wird. Hierzu kann der Zulaufschacht 11 über eine Leitung mit der Druckleitung 18 verbunden sein. Das Drosselventil 12 kann in der von der Druckleitung 18 abzweigenden und in den Zulaufschacht 11 mündenden Leitung angeordnet sein.

Wenn im Bereich des Austeilbehälters 5, des Zulaufschachtes 11 und in der Druckleitung 18 gleiche bzw. ähnliche Druckverhältnisse herrschen, ist die Druckdifferenz, welche durch die Venturi Düse 10 erzeugt wird, ausreichend, damit Futter aus dem Austeilbehälter 5 in die Förderleitung 16 gesaugt und ein Entweichen des Fördermediums aus der Förderleitung 16 im Bereich der Venturi-Düse 10 verhindert wird.

Darüber hinaus kann durch eine Veränderung der Druckverhältnisse zwischen dem abgezweigten Fördermedium und dem in der Förderleitung 16 befindlichen die Einbringgeschwindigkeit des Futters in das Fördermedium beeinflusst werden.

Es ist jedoch ebenfalls möglich, dass anstatt Fördermedium vom Förderstrom abzuzweigen, mittels eigenem Gebläse oder Verdichter, der mit dem Austeilbehälter 5 und/oder dem Zulaufschacht 11 verbunden ist, einen Druckausgleich herzustellen.

Damit nur dann Futter in die Förderleitung 16 transportiert wird, wenn dies auch erwünscht ist, wird der Austeilschieber 8, welcher die Auslassöffnung bei Austeilbehälter 5 verschließt, erst zum gewünschten Förderbeginn geöffnet.

Des Weiteren verfügt der Austeilbehälter 5 auch über ein Entlüftungsventil 15, welches dann geöffnet wird, wenn kein Futter in die Förderleitung 16 dosiert wird.

Die Ausführungsbeispiele zeigen mögliche Ausführungsvarianten der erfindungsgemäßen Fütterungsvorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Der Ordnung halber sei abschließend darauf hingewiesen, dass zum besseren Verständnis des Aufbaus der erfindungsgemäßen Fütterungsvorrichtung diese bzw. deren Bestandteile teilweise unmaßstäblich und/oder vergrößert und/oder verkleinert dargestellt wurden.

### Bezugszeichenaufstellung

- 1: Anmischbehälter
- 2: Mischer
- 3: Abwurfklappe
- 4: Übergangsstück
- 5: Austeilbehälter
- 6: Einlaufklappe
- 7: Mischer
- 8: Austeilschieber
- 9: Antrieb
- 10: Venturi-Düse
- 11: Zulaufschacht
- 12: Drosselventil
- 13: Drosselventil
- 14: Absperrventil
- 15: Entlüftungsventil
- 16: Förderleitung
- 17: Verdichter
- 18: Druckleitung
- 19: Komponentenzubringung
- 20: Waage
- 21: Waage

## Patentansprüche

1. Fütterungsvorrichtung mit zumindest einem Austeilbehälter (5) und zumindest einer, den Austeilbehälter (5) mit zumindest einer Abgabestelle verbindenden Förderleitung (16), wobei die zumindest eine Förderleitung (16) mit zumindest einem Verdichter (17) oder zumindest einem Gebläse zur Erzeugung einer Strömung in einem Fördermedium, insbesondere Luft, im Inneren der Förderleitung (16) in Richtung der zumindest einen Abgabestelle verbunden ist, **dadurch gekennzeichnet, dass** der Austeilbehälter (5) über zumindest einen Zulaufschacht (11) mit zumindest einer zwischen der zumindest einen Förderleitung (16) und dem zumindest einen Verdichter (17) oder dem zumindest einen Gebläse angeordneten Venturi-Düse (10) verbunden ist.

2. Fütterungsvorrichtung nach Anspruch 1, **dadurch gekennzeichnet, dass** der Austeilbehälter (5) mit dem zumindest einen, mit der Förderleitung (16) verbundenen Verdichter (17) oder Gebläse verbunden ist, oder dass der Austeilbehälter (5) mit zumindest einem, von dem mit der Förderleitung (16) verbundenen Gebläse getrennten Gebläse oder mit zumindest einem, von dem mit der Förderleitung (16) verbundenen Verdichter (17) getrennten Verdichter verbunden ist.

3. Fütterungsvorrichtung nach Anspruch 2, **dadurch gekennzeichnet, dass** stromaufwärts vor der zumindest einen Venturi-Düse (10) von einer die zumindest eine Förderleitung (16) mit dem Gebläse oder dem Verdichter (17) verbindenden Druckleitung (18) zumindest eine Leitung abzweigt, welche in den Austeilbehälter (5) mündet.

4. Fütterungsvorrichtung nach Anspruch 2, **dadurch gekennzeichnet, dass** in der zumindest einen, in den Austeilbehälter (5) mündenden Leitung zumindest ein Drosselventil (13) und/oder zumindest ein Absperrventil (14) angeordnet ist.

5. Fütterungsvorrichtung nach einem der Ansprüche 1 bis 4, **dadurch gekennzeichnet, dass** der zumindest eine Zulaufschacht (11) mit dem zumindest einen, mit der Förderleitung (16) verbundenen Verdichter (17) oder dem zumindest einen mit der Förderleitung (16) verbundenen Gebläse verbunden ist, oder dass der zumindest eine Zulaufschacht (11) mit zumindest einem, von dem mit der Förderleitung (16) verbundenen Gebläse unterschiedlichen Gebläse oder mit zumindest einem, von dem mit der Förderleitung (16) verbundenen Verdichter (17) unterschiedlichen Verdichter verbunden ist.

6. Fütterungsvorrichtung nach Anspruch 5, **dadurch gekennzeichnet, dass** stromaufwärts vor der zumindest einen Venturi-Düse (10) von zumindest einer, die zumindest eine Förderleitung (16) mit dem zumindest einen Verdichter (17) oder dem zumindest einen Gebläse verbindenden Druckleitung (18) zumindest eine Leitung abzweigt, welche in den Zulaufschacht (11) mündet.

7. Fütterungsvorrichtung nach Anspruch 4, **dadurch gekennzeichnet, dass** in der zumindest einen, in den zumindest einen Zulaufschacht (11) mündenden Leitung zumindest ein Drosselventil (12) angeordnet ist.

8. Fütterungsvorrichtung nach einem der Ansprüche 1 bis 5, **dadurch gekennzeichnet, dass** der zumindest eine Austeilbehälter (5) zumindest eine Auslassöffnung aufweist, die mit zumindest einem Austeilschieber (8) verschließbar ist.

9. Fütterungsvorrichtung nach einem der Ansprüche 1 bis 5, **dadurch gekennzeichnet, dass** sie zumindest ein Entlüftungsventil für den Austeilbehälter (5) aufweist.

10. Fütterungsvorrichtung nach einem der Ansprüche 1 bis 10, **dadurch gekennzeichnet, dass** der Austeilbehälter (5) mit einem Anmischbehälter (1) zum Mischen von Futter verbunden ist, oder dass der Austeilbehälter (5) auch dem Mischen von Futter dient.
